# EUROPEAN PATENT APPLICATION

(11) **EP 4 600 880 A1**
(43) Date of publication of application: **13.08.2025**
(21) Application number: 24156398.0
(22) Date of filing: 07.02.2024
(51) Int. Cl.: G06Q 10/10, G06Q 10/109, G06Q 10/1093

(54) **SYSTEM AND METHOD FOR PREDICTING AND INDICATING MEETING START TIME TO WAITING USERS OF A CONFERENCE**

(71) Applicant: Unify Beteiligungsverwaltung GmbH & Co. KG, 81739 München (DE)
(72) Inventor: Klaghofer, Karl, 81373 München (DE); Brochonski, Michael, Curitiba 82620-265 (BR)
(74) Representative: Schaafhausen, Anne

(57) **Abstract**

The invention relates to a method and a system for meeting opening prediction to conference participants, while waiting in a conference call for the conference call to start, e.g. how long it will take until the moderator can open the meeting. In case of waiting users waiting in an isolated waiting room, the time until the users get connected to each other is indicated for example as a countdown. The indicated countdown allows waiting users to do other productive work while waiting and allows the moderator to better know how long he should wait until opening the meeting as likely the missing users will have joined by then. Also, if the conference has not yet been started (no one has joined yet), it can automatically be re-scheduled or conference participants get an indication of meeting starting later.

## Description

The present invention relates to a system and a method for predicting and indicating meeting start time or countdown to waiting users of a conference.

In Conference Calls (aka. Remote or Electronic Meetings), today it often happens that conference participants have to wait minutes before the conference call actually can be started (e.g. open by the moderator), because one or more (required or mandatory) conference participants are still missing. This is waste of time for all the participants who have joined on time. Even more annoying is that it is unclear how long it will take before all the remaining (missing) users will join. Due to this uncertainty, it is difficult for the waiting users to start other work, as it could be 10 minutes remaining waiting time but could also just be 30 seconds remaining waiting time. Hence, participants have to be ready to start at any time. For the meeting moderator it is also difficult, as he/she does not know for how long he/she should wait to open the meeting (resulting either in silence or in moderator talking about weather or doing other small talk with the other waiting users).

It is known from the state of the art, e.g. from Contact Center products, that a calling customer gets an announcement about expected waiting time while waiting in the queue before a free agent will be connected.

For example, US 20110252097 A1 facilitates predicting meeting attendance by estimating the time of arrival (ETA) of participants based on geospatial data, external factors like traffic, and ongoing meetings. It utilizes GPS and network communications to gather data for ETA calculations, which in turn aid in potentially adjusting the meeting event details. This method primarily relies on static data and predetermined factors to provide an estimation, lacking a real-time, dynamic update mechanism for various user-centric scenarios such as overrunning meetings or manual inputs regarding delays from participants.

US20190197490 A1 discloses a method of estimating the arrival time of attendees in electronic meetings based on their engagement in other ongoing meetings and historical data. It utilizes a computer-implemented system to analyze meeting schedules and ongoing meetings to determine and communicate the estimated time of arrival to other attendees. This method, while beneficial in providing a rough estimate, lacks real-time updates and the ability to aggregate manual inputs from users regarding delays, which can limit the interactive and dynamic management of electronic meeting schedules, especially in scenarios of potential rescheduling or unforeseen delays.

The solutions of the known prior art can provide estimates based on historical data or geospatial information, aiding in predicting meeting attendance or participant arrival times. However, they do not offer real-time, dynamic updates based on live inputs from attendees or consider various user-specific scenarios like manually input delays due to unforeseen circumstances, automated delay predictions from recurring meeting overrun trends, automated notifications for meetings running late, real-time adjustments to meeting schedules based on ongoing delays, potential rescheduling or notifications sent out before a meeting starts if any delay is detected, aggregating delay information from multiple sources to provide a comprehensive update to all attendees and/or user delay notification to the waiting users.

Therefore, the present invention is based on the object to provide a method and a corresponding system for predicting and indicating meeting start time or countdown to waiting users of a conference, in particular, by providing a real-time update and the ability to aggregate different types of delay information, creating a more interactive and user-centric approach to managing electronic meeting schedules.

This object is solved by a method having the features according to claim 1 and a system having the features of claim 11. Preferred embodiments of the invention are defined in the respective dependent claims.

According to the invention, a method for predicting and indicating conference start time to waiting users of a conference is provided, the method comprising the steps of:
- monitoring, by a conference start predictor, CSP, system, before a scheduled conference time, input data which indicate that at least one participant of that scheduled conference will be late for that scheduled conference;
- aggregating, by the CSP system, the input data and calculating a predicted conference start time on the basis of the input data;
- notifying, by the CSP system, the participants of the scheduled conference the predicted conference start time;
- opening, by the CSP system or a moderator or an arbitrary participant of the scheduled conference, the scheduled conference at the begin of the predicted conference start time.

In the sense of the invention, a missing user is a user or participant of a scheduled conference who will be late to join this scheduled conference. In some cases a missing user is a mandatory participant or a special person who is required for this scheduled conference.

In the sense of the invention, a conference is a synonym for a meeting. Both can comprise phone calls, video calls or every kind of communication/collaboration channel or tool where people can work together and exchange information.

In the sense of the invention, user late data are input data which reveal upon analyses that a certain participant will be late for a scheduled conference. Further, user late detection also describes this process.

According to a preferred embodiment, the monitoring of input data involves analyzing previous conferences of the participants who will also take part in the scheduled conference, using transcription, natural language processing, NLP, machine learning, ML, and/or artificial intelligence, Al.

According to another preferred embodiment, the monitoring of input data involves analyzing behavior profiles from previous conferences series of the participants who will also take part in the scheduled conference and/or analyzing stored behavior profiles of the participants who will also take part in the scheduled conference.

According to still another preferred embodiment, the monitoring of input data involves collecting and analyzing manual input data of participants who will also take part in the scheduled conference.

Further, according to a preferred embodiment, the method further comprises triggering, by the CSP system, the monitoring of a previous conference from a predetermined time before the start of the scheduled conference unless the previous conference is already monitored from the beginning.

According to yet another preferred embodiment, the method further comprises re-scheduling the scheduled meeting in case the monitoring and analyzing of input data reveal that at least one participant of the scheduled conference will be late for the scheduled conference and the scheduled conference has not been started before the scheduled conference time.

According to yet another preferred embodiment, the method further comprises setting, by the CSP system, a preconfigurable timer at the beginning of the scheduled conference time, wherein after this timer expires, the step of aggregating the input data takes place.

According to yet another preferred embodiment, the step of notifying further comprises indicating, by the CSP system, the predicted conference start time in form of a countdown to waiting participants of the scheduled conference.

According to yet another preferred embodiment, the step of notifying further comprises indicating, by the CSP system, the names of participants which will be late for the scheduled conference to waiting participants of the scheduled conference.

According to yet another preferred embodiment, the step of opening the scheduled conference further comprises connecting by a conference application the participants together if they were waiting in isolated waiting rooms.

According to the invention, a CSP system is provided, wherein the CSP system is configured to perform the method for predicting and indicating meeting start time to waiting users of a conference.

According to a preferred embodiment, the CSP system further comprises:
- an input data module to collect and monitor the input data;
- an aggregation module to aggregate and calculate the predicted conference start time;
- a preconfigurable timer module which is triggered at the beginning of the scheduled conference time, wherein after its expiry the predicted conference start time is notified to the participants of the scheduled conference;
- a notifier module to notify the participants of the scheduled conference about the predicted conference start time.

According to another preferred embodiment, the CSP system further comprises a scheduler to automatically re-scheduling the scheduled conference to start a predetermined time later or to start at a time later according to the analysis of the input data.

According to yet another preferred embodiment, the CSP system comprises or is at least connected to a groupware service, a conference application, a conference media bridge and/or conference media server. Further, the CSP system can be a standalone application interacting with a conference application (e.g. OpenScape UC, Unify Office, MS Teams, etc.), a conference media bridge and/or conference media server and the Groupware service or groupware application (e.g. MS Outlook), or it can be an enhanced function of a conference application and/or a Groupware service or application. The term groupware service - also known as group software (application), collaboration software or collaborative software - refers to software that enables a group or team to work together across time and/or space in other words it is a computer-based system that supports a group of people in their task or goal and provides an interface for a shared work environment. Groupware Service can for example comprise calendar, scheduling, email applications etc.

According to still another preferred embodiment, the CSP system is used for unified communication, UC, conferences, unified communication as a service, UCaaS, conferences, E-Consultation meetings and/or telehealth E-Consultation meetings.

The subject invented solution is a CSP application service (system and method), predicting and indicating the remaining waiting time to the moderator and to all other waiting conference participants who have joined a scheduled conference already, in other words, an application service predicting and indicating how long it will take until all required (but late) users will have joined and thus the conference will be opened by a moderator.

In case the waiting users are waiting in an isolated "waiting room", the CSP system can predict the time until the users will be joined together via the Conference application or conference media bridge (media server).

Further, conference start (conference opening) prediction can optionally be indicated as a countdown to conference participants, while waiting in a conference to open (to actually start). The indicated countdown allows waiting users to do other productive work while waiting and allows the moderator to better know how long he should wait until opening the meeting (as likely the missing or late users will have joined by then). Also, if the conference has not yet been started (no one has joined yet), it can automatically be re-scheduled or conference participants can get a notification that the conference is starting later.

Furthermore, the invention covers two main electronic meeting (conference) variants:
- waiting conference users get immediately joined together into an active conference (e.g. via media server) upon joining, but conference moderator has not yet "opened" (started) the conference as a few (important or mandatory) participants have not yet joined;
- users waiting in isolated rooms, so called "waiting rooms", for the actual conference start which will be the point of time when the waiting conference participants will be joined together (e.g. via the conference media server).

It has also to be noted that aspects of the invention have been described with reference to different subject-matters. In particular, some aspects or embodiments have been described with reference to apparatus type claims, whereas other aspects have been described with reference to method type claims. However, a person skilled in the art will gather from the above and the following description that, unless otherwise notified, in addition to any combination between features belonging to one type of subject-matter, also any combination between features relating to different types of subject-matters is considered to be disclosed with this text. In particular, combinations between features relating to the apparatus type claims and features relating to the method type claims are considered to be disclosed. In particular, any combinations between features relating to the different embodiments are considered to be disclosed. The invention and embodiments thereof will be described below in further detail in connection with the drawings.
- Fig. 1: shows a schematic high-level illustration of a base scenario of user late detection, wherein a previous meeting is anyway being transcribed and analyzed in real-time from the beginning according to an embodiment of the invention.
- Fig. 2: shows a schematic high-level illustration of a base scenario of user late detection, wherein a previous meeting is being transcribed and analyzed in real-time from a preconfigured time before the planned end of the meeting according to another embodiment of the invention.
- Fig. 3: shows a schematic high-level illustration of a base scenario of user late detection wherein a previous meeting is being transcribed and analyzed in real-time from a preconfigured time before the planned end of the meeting and wherein the subsequent meeting is rescheduled according to another embodiment of the invention.
- Fig 4: shows a schematic illustration of a detailed user late detection according to another embodiment of the invention.
- Fig. 5: shows a schematic high-level illustration of a system architecture according to another embodiment of the invention.
- Fig. 6A - 6D: show several flow diagrams of the method from a given meeting perspective according to another embodiment of the invention.

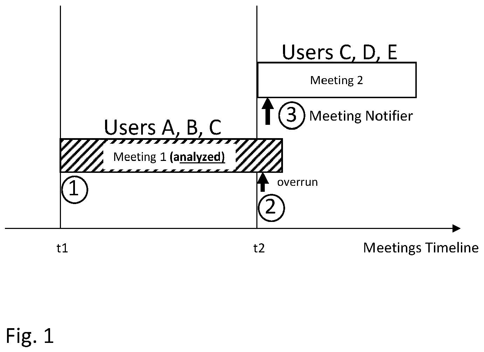

The schematic high-level illustrations of base scenarios of user late detection shown below in the description of the figures 1 - 3 and in further examples use input data of various sources received direct or indirect from (or for) the various missing or delayed users, the inventive system also named CSP receiving and aggregating these different input data.

Input data can be manual entries by the missing users themselves (directly) or can be automated input data (determining users late) by automated systems on behalf of the missing users (indirectly). Different sources of possible "user late" input data are shown in the following description of the figures 1 - 3 and further examples below for a given meeting 2, with some users (D, E) already waiting in the meeting, but other required users still missing (user C).

Fig. 1 schematically shows a high-level illustration of a base scenario of user late detection. In this scenario, a previous meeting is anyway being transcribed and analyzed in real-time from the beginning. Two planned meetings (meeting 1 and meeting 2) are shown, which are scheduled to take place (start) at time t1 and t2, respectively. Meeting 2 is to take place directly after meeting 1 at time t2. User C should or must be present in both meetings (user C can therefore also be described as a mandatory user). Consequently, meeting 2 can only start when user C has joined it. However, user C's previous meeting 1 is delayed (overrun). The previous meeting 1 is transcribed from the beginning anyway and analyzed in real time, e.g. with NLP, ML, AI and/or other data and methods. The analysis system recognizes a statement from user C who says: "Okay, we can extend the meeting by another 10 minutes, but I will be late for my next meeting"). The waiting users in meeting 2 (users D and E) receive a notification that the meeting will open in 10 minutes (e.g. in the form of a countdown). The most important steps 1 - 3 (in circles) from Fig. 1 are summarized below:
1. Meeting 1 is being transcribed and NLP analyzed in real-time from the beginning (timepoint t1).
2. Short past timepoint t2 after meeting 2 has already been started (see arrows), NLP detects User C will be late for next meeting 2 by saying something like *"Okay, we can extend the meeting for further 10 minutes, but I will be late for my next meeting".*
3. CSP notifies participants of meeting 2: As User C is also a (mandatory) invited user for meeting 2, the Meeting Notifier presents to the waiting users (including moderator) a Countdown Indicator (e.g. with a 10:00min-countdown).

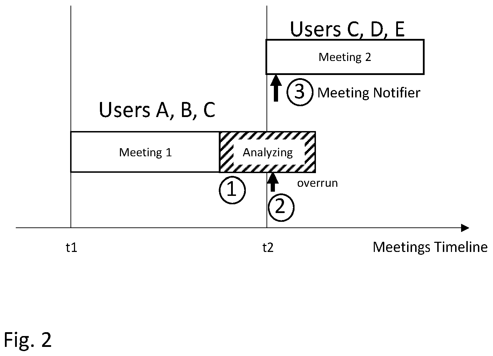

Fig. 2 shows another schematic high-level illustration of a base scenario of user late detection. According to this scenario, a previous meeting is being transcribed and analyzed in real-time from a preconfigured time before the planned end of the meeting. Fig. 2 is based on Fig. 1, so that the terminology from Fig. 1 also applies to Fig. 2. However, the scenario from Fig. 2 has the difference that the mandatory User's C previous meeting 1 is not analyzed from the beginning. However, N minutes (configurable time) before the end of the scheduled meeting 1, the analysis (transcription, NLP, etc.) of the previous meeting 1 is automatically started to enable a late "intent detection" of the user C. As already shown in Fig. 1, the system detects that user C is 10 minutes late based on NLP analyses. The most important steps 1 - 3 (in circles) from Fig. 2 are summarized below:
1. Meeting 1 is not being recorded, transcribed and NLP analyzed from the beginning. However, meeting 1 starts automatically being transcribed and analyzed N min (e.g. 10 min) before scheduled meeting 1 ends (i.e. 10 min before meeting 2 start) for user late "intend detection".
2. Short past t2 after meeting 2 has already been started, NLP detects User C will be late for the next meeting *("Okay, we can extend the meeting for further 10 minutes, but I will be late for my next meeting"*)
3. CSP notifies participants of meeting 2: As User C is also a (mandatory) invited user for meeting 2, the Meeting Notifier presents to the waiting users (including moderator) a countdown indicator e.g. with a 10:00min-countdown.

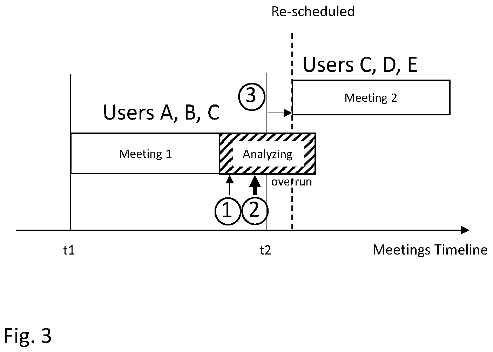

Fig. 3 shows a schematic high-level illustration of a base scenario of user late detection. Here, a previous meeting is being transcribed and analyzed in real-time from a preconfigured time before the planned end of the meeting and a subsequent meeting is rescheduled accordingly. This further scenario is also based on the nomenclature of Fig. 2, so that the terminology is also used for Fig. 3. However, the scenario in Fig. 3 shows the following differences to Fig. 2. If any user delay is detected for meeting 2 before meeting 2 has even been started, the system can either automatically reschedule the meeting calendar appointment (starting 10 min later) as shown in Fig. 3, or display an indication to all invited meeting users for meeting 2 that this meeting 2 will be started N minutes later (even if meeting 2 has not yet been joined by anyone). This CSP Notifier (without a Countdown) can be for example a part of the conference application user interface (e.g. in text chat, etc.), part of the calendar appointment user interface (e.g. in a calendar application entry), further also an automated email may be sent as an implementation option. The most important steps 1 - 3 (in circles) from Fig. 2 are summarized below:
1. Meeting 1 is automatically transcribed and NLP analyzed N minutes before meeting 1 scheduled end (i.e. N minutes before meeting 2 scheduled start).
2. Before t2, i.e. before the scheduled start of meeting 2, NLP detects (mandatory) User C being late (*user* C says *something like "Okay, we can extend the meeting for 10 minutes"*).
3. Re-scheduling meeting 2: As no one has started (joined) meeting 2 yet, the meeting scheduler automatically re-schedules meeting 2 to start 10 minutes later.
   As a *further option (not shown), instead of re-scheduling the meeting 2 in the meeting calendar, the system may indicate a meeting notifier to all users of meeting 2, indicating that meeting 2 will be started 10 min later.*

Furthermore, there are many other ways of using the method and system according to the invention. Some examples are shown below, but these are not illustrated in the figures. However, they have the same terminology and a similar or even the same scenario structure as used in figures 1 - 3. The examples in figures 1 - 3 and the following examples can be combined with each other as desired, depending on the purpose that the method and the system are intended to fulfil. Individual aspects of one example can also be combined with those of another.

Further example 1: A User is still in another meeting 1, which is one of a regular meeting series that typically exceeds the planned calendar entry by an average of 9 minutes (as known by the ML system). Thus, the automated system feeds 9 minutes delay into the system (CSP) for this user for the meeting 2.

Further example 2: A user, who knows that he will be late due to an overrunning other meeting 1, predicts that he will be late for meeting 2 for about 5 minutes. He manually enters being late 5 minutes into the system (CSP) application.

Further example 3: A user who knows that he will be late due to a little break needed after a previous meeting 1 manually enters 3 minutes late into the system (CSP).

Further example 4: A user X already has had 3 serial meetings in his calendar (and participated all 3 meetings as planned à 1 hour = 3 hours in total) right before meeting 2. The automated system knows, by ML, that this user X typically takes a 10 minutes break after 3 hours of subsequent meetings. Thus, the automated system predicts 10 minutes delay for this user X for meeting 2 and feeds the value of 10 min into the system (CSP).

Further example 5: User Y is on vacation and thus an entry (e.g. "Out of Office" or else) is or was received by the system (CSP), meaning it is not mandatory to wait for user Y.

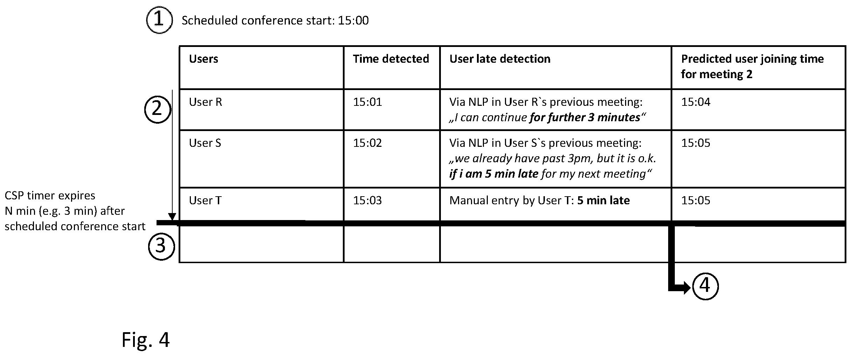

The system (CSP) continuously monitors the input data (user late prediction numbers) coming in either manually from the missing (mandatory) meeting participants themselves, or automatically by the system (e.g. using NLP, ML, etc.). Then the system aggregates the numbers and notifies and displays the resulting number (10 minutes delay) to all users already in the meeting (waiting users). Preferably, a system (CSP) notifier module for notifying the waiting users is implemented as a "Countdown Indicator" (in form of minutes:seconds), plus optionally the name(s) of the late users. A detailed view of user late detection is depicted in Fig. 4.

Fig 4 shows a schematic illustration of a detailed user late detection. In this scenario, a meeting is scheduled for 15:00h and started on time by a few meeting participants and a moderator. But other invited users (R, S, T and U) are missing. The exact time when a "user late intent" is detected together with the "relative vs. absolute" time statements detected by using NLP are considered in this aspect. In other words, this should mean that, for example, detecting "I will be late 10 min for my next meeting" is different than detecting at 14:55h "I will continue here for further 10 minutes". In the first example prediction is that the user will be joining at 15:10h, whereas in the second example prediction is that the user will be joining at 15:05h. The most important steps 1- 4 (in circles) from Fig. 4 are summarized below:
1. Some meeting participants joined on time at 15:00h and are also already connected (conference bridge), but waiting for missing users R, S, T and U.
2. The system, also named CSP collects "User Late" detections/indications for this meeting for the missing users R, S and T. No indication is received for user U.
3. The system (CSP) after a preconfigurable time (e.g. 3 minutes after the scheduled conference start) takes all inputs received so far and aggregates them to obtain a predicted meeting start time, in this example 15:05h.
4. At 15:03h, the system (CSP) (e.g. notifier module) sends/displays to all waiting users of the meeting a countdown indicator which was set to 2 min. All waiting users now know that they have still 2 min to wait before the moderator will open the meeting.

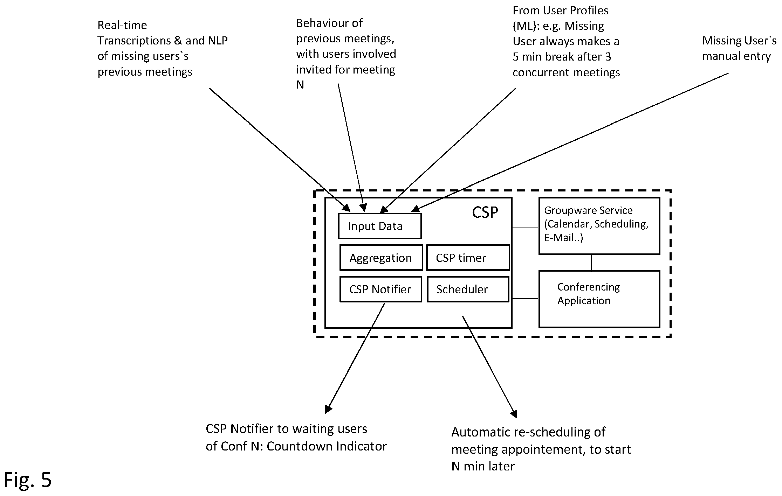

Fig 5 shows a schematic high-level illustration of a system architecture. The underlying scenario is the user late detection for a meeting N. However, the system can be adapted to every scenario described in this document. The system can also be identified a Conference Start Predictor, CSP, system which is configured to fulfill all or certain necessary steps of the method for predicting and indicating meeting start time to waiting users of a conference. The system or the CSP system can therefore be regarded as synonyms and can comprise the following components, although not all of these components always need to be present. The components can also represent both three-dimensional physical features (e.g. real physical entities, like hardware, etc.) and virtual features (e.g. virtual server, services, etc.).

The CSP may be a separate service or may be a function of a Groupware calendar service or may be a function of a Conferencing application. In any case, the CSP has interfaces to the core Groupware Calendar service (e.g. MS Outlook) and to the Conference application. The term groupware service - also known as group software, collaboration software or collaborative software - refers to software that enables a group or team to work together across time and/or space, in other words it is a computer-based system that supports a group of people in their task or goal and provides an interface for a shared work environment. Groupware Service can for example comprise calendar, scheduling, email applications etc.

The system can further comprise an Input Data module which can monitor and collect user late data from different input sources. These different sources can be for example Real-time Transcriptions and NLP of missing users' previous meetings, behavior of previous meetings of users involved which were invited for a next meeting N, data from user profiles (ML) (e.g. missing user always making a 5 min break after 3 concurrent meetings) and/or missing users' manual entries.

The system can further comprise an aggregation module which aggregates input data and calculates a predicted conference start time, which is actually the predicted conference opening time (when the moderator will open the meeting with the waiting users).

The system can further comprise a CSP timer. This timer can be used to set a configurable period of time during which the CSP waits for user late data to be collected.

The CSP timer is active (for a meeting) as long as "user late input data" is being collected for this given meeting. On timer expiry, a notification with the Countdown Indicator is being sent to the waiting users and collecting user late data for this meeting is stopped.

The system can further comprise a CSP notifier module which is capable to send the notifications to the waiting users. The CSP notifier module can send at least two variants of notification. The first variant comprises a countdown indicator which is used when CSP timer has expired and the system has collected and analyzed all information to know about the aggregated predicted start time. The second variant is without a countdown indicator. This is an option to send to conference users an early indication that the system has detected at least one user being late for meeting N. However, user late data collection for this meeting N is still ongoing and thus the system does not send a countdown indicator at this point, yet.

The system may further comprise a Scheduler. In case User(s) Late detected is already detected before the meeting N has been started, the meeting N may automatically be re-scheduled. Automatic re-scheduling of meeting N appointment means that the meeting N is to start X min later, where X is the number of minutes by which the next meeting N is to be postponed, whereby the system has calculated the number of X minutes from the aggregated input data.

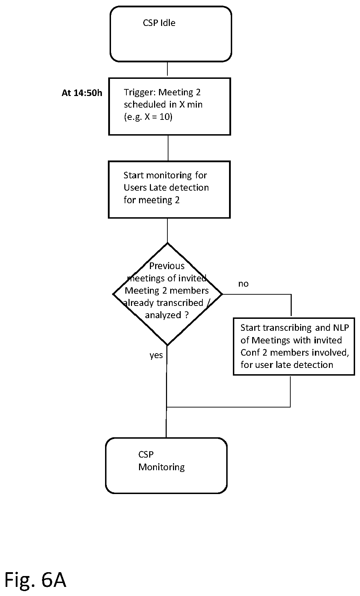

Fig. 6A - 6D show several flow diagrams of the method from a given meeting perspective according to embodiments of the invention. The flow diagrams of the method shown in figures 6A - 6D are generally valid for the method according to the invention but are described below using an example scenario for better understanding. In this scenario, a meeting 2 is assumed which is scheduled for the time 15:00h. At this time, meeting 2 is to be started, or more precisely opened, by the moderator of meeting 2 or an arbitrary or authorized participant of meeting 2. In Fig. 6A, the system or the CSP is in idle mode. At a predetermined time before the start of the actual meeting 2, in this case 10 minutes beforehand, a trigger is activated, and the system starts to monitor ongoing meetings of participants of meeting 2. For this purpose, a query is first made as to whether ongoing meetings of participants of meeting 2 are already being monitored, whereby the monitoring aims to collect data that provides information as to whether a delay of participants in meeting 2 is to be expected. Ongoing meetings that are already being monitored will continue to be monitored and ongoing meetings that are not yet being monitored will be monitored from this point onwards. The monitoring is carried out using means known from the state of the art, such as transcription and NLP natural language processing.

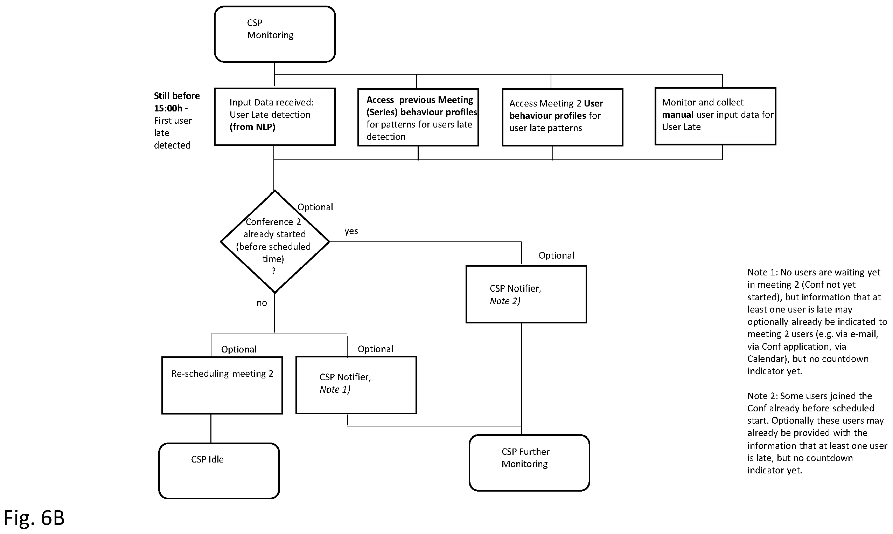

Fig. 6B also shows an example of input data that could be used by the monitoring process to indicate that one or more participants of meeting 2 are late. This all happens before the scheduled start or opening of meeting 2, i.e. in this example before 15:00h. Input data that is received can, for example, be data from the NLP analysis in which a user in an ongoing meeting announces that he/she will be a few minutes late for meeting 2. However, data from behavioral profiles of previous meetings or general behavioral profiles of the participants of meeting 2 can also be used. Behavioral profiles here mean those relating to joining behavior, lateness behavior or usual habits between meetings etc. Furthermore, the input data can also be transmitted directly by the participants, e.g. by manually entering a notification of lateness. Optionally, Fig. 6B also shows the scenario in which meeting 2 has already started before the actual start time 15:00h. This may be the case if participants have already joined the meeting 2. Depending on the configuration of the conference application settings, the users may already be connected and communicating with each other, or the users may be waiting individually or in groups in waiting rooms for the actual start of meeting 2. The users may already be informed that at least one of the participants will be late and the meeting will therefore start later, but no countdown is displayed. If, on the other hand, no user has joined the conference application yet, meeting 2 can be postponed and the participants will receive a notification via the conference application, email or other communication channels. In such a case, the CSP system returns to idle mode. Another option is that users who join before the actual start of meeting 2 (i.e. join meeting 2 before 15:00h) are already informed that at least one of the participants will be late and the meeting will therefore start later, but no countdown is displayed.

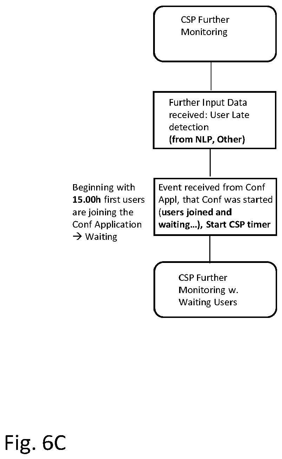

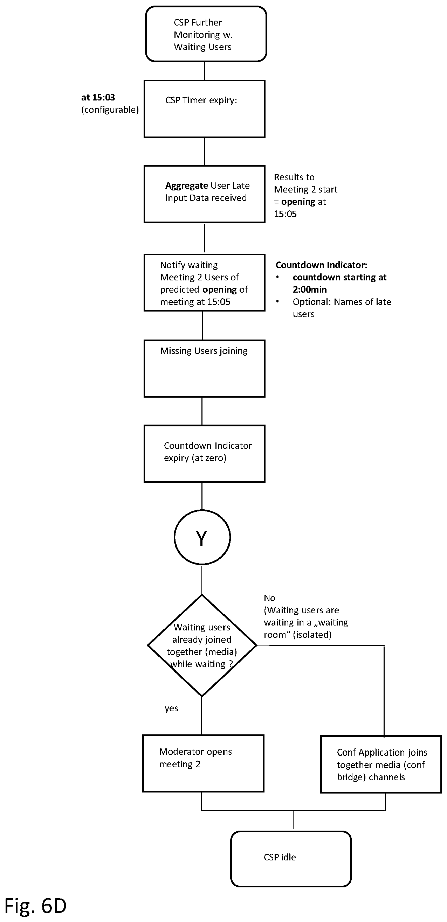

Fig. 6C shows a further process that can follow on after the processes in Fig. 6A and/or 6B. The CSP system will initially collect input data which indicate that participants will join meeting 2 late until the start of meeting 2. A timer (CSP timer) is triggered at the start of meeting 2. This timer can be preconfigured. Input data is collected and analyzed until the timer expires. The method sequence shown in Fig. 6D is then followed.

Fig. 6D shows that the timer expires at 15:03h (i.e. the timer was preconfigured to 3 min). From this point onwards, no more input data is collected and the aggregate module of the CSP system analyses the input data received if this has not already been done. The aggregate module then calculates a delayed start time for meeting 2, in this case opening of meeting 2 at 15:05h. Participants who have already joined meeting 2 are then informed of the delayed start time of meeting 2 via the CSP-Notify module in the form of a countdown. Optionally, the names of the delayed participants can also be displayed or otherwise transmitted. Once the countdown has expired, the moderator will open meeting 2 if all participants have already been connected, otherwise the participants waiting in different waiting rooms will be connected together and meeting 2 will then begin. The CSP system returns to idle mode after the start of meeting 2.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

## Claims

1. A method for predicting and indicating meeting start time to waiting users of a conference comprising the steps of:
- monitoring, by a conference start predictor, CSP, system, before a scheduled conference time, input data which indicate that at least one participant of that scheduled conference will be late for that scheduled conference;
- aggregating, by the CSP system, the input data and calculating a predicted conference start time on the basis of the input data;
- notifying, by the CSP system, the participants of the scheduled conference the predicted conference start time;
- opening, by the CSP system or a moderator or an arbitrary participant of the scheduled conference, the scheduled conference at the beginning of the predicted conference start time.

2. The method according to claim 1, wherein the monitoring of input data involves analyzing of previous conferences of the participants who will also take part in the scheduled conference, using transcription, natural language processing, NLP, machine learning, ML, and/or artificial intelligence, Al.

3. The method according to claim 1, wherein the monitoring of input data involves analyzing of behavior profiles from previous conferences series of the participants who will also take part in the scheduled conference and/or analyzing of stored behavior profiles of the participants who will also take part in the scheduled conference.

4. The method according to claim 1, wherein the monitoring of input data involves collecting and analyzing manual input data of participants who will also take part in the scheduled conference.

5. The method according to any one of the preceding claims, wherein triggering, by the CSP system, the monitoring from a predetermined time before the start of the scheduled conference unless the previous conference is already monitored from the beginning.

6. The method according to any one of the preceding claims, wherein re-scheduling the scheduled meeting in case the monitoring and analyzing of input data reveal that at least one participant of the scheduled conference will be late for the scheduled conference and the scheduled conference has not been started before the scheduled conference time.

7. The method according to any one of the preceding claims, wherein a preconfigurable timer is set by the CSP system at the beginning of the scheduled conference time, wherein after this timer expires, the step of aggregating the input data takes place.

8. The method according to any one of the preceding claims, wherein the step of notifying further comprises indicating, by the CSP system, the predicted conference start time in form of a countdown to waiting participants of the scheduled conference.

9. The method according to any one of the preceding claims, wherein the step of notifying further comprises indicating, by the CSP system, the names of participants which will be late for the scheduled conference to waiting participants of the scheduled conference.

10. The method according to any one of the preceding claims, wherein the step of opening the scheduled conference further comprises connecting by a conference application the participants together if they were waiting in isolated waiting rooms.

11. A conference start predictor, CSP, system, wherein the CSP system is configured to perform the method for predicting and indicating meeting start time to waiting users of a conference according to any of the claims 1 to 10.

12. CSP system according to claim 11, further comprising:
- an input data module to collect and monitor the input data;
- an aggregation module to aggregate and calculate the predicted conference start time;
- a preconfigurable timer module which is triggered at the beginning of the scheduled conference time, wherein after its expiry the predicted conference start time is notified to the participants of the scheduled conference;
- a notifier module to notify the participants of the scheduled conference about the predicted conference start time.

13. CSP system according to anyone of the claims 11 and/or 12, wherein the CSP system further comprises a scheduler to automatically re-schedule the scheduled conference to start a predetermined time later or to start at a time later according to the analysis of the input data.

14. CSP system according to anyone of the claims 11 to 13, wherein the CSP system comprises or is at least connected to a groupware service, a conference application, a conference media bridge and/or conference media server.

15. CSP system according to anyone of the claims 11 to 14, wherein the CSP system is used for unified communication, UC, conferences, unified communication as a service, UCaaS, conferences, E-Consultation meetings and/or telehealth E-Consultation meetings.
